# FASCICULE DE BREVET EUROPEEN

(11) **EP 3 408 571 B1**
(45) Date de publication et mention de la délivrance du brevet: **13.11.2019**
(21) Numéro de dépôt: 17701346.3
(22) Date de dépôt: 26.01.2017
(51) Int. Cl.: F16L 11/08, F16L 33/01, F16K 15/06, F16K 17/04, F16K 31/00, F16K 17/40

(54) **LIGNE FLEXIBLE À ANNULAIRE INONDÉ**
FLEXIBLE LEITUNG MIT GEFLUTETEM RINGFÖRMIGEM RAUM
FLEXIBLE LINE WITH FLOODED ANNULAR SPACE

(30) Priorité: 28.01.2016 FR 1650697
(43) Date de publication de la demande: 05.12.2018
(73) Titulaire: Technip France, 92400 Courbevoie (FR)
(72) Inventeur: MORAND, Henri, 22081-025 Rio De Janeiro (BR); DESAMAIS, Nicolas, 76190 Ecalles-Alix (FR); RIVET, Romain, 76000 Rouen (FR)
(74) Mandataire: Lavoix
(86) Numéro de dépôt international: PCT/EP2017/051634
(87) Numéro de publication internationale: WO 2017/129672

(56) Documents cités:
- EP-A1- 0 341 144
- EP-A2- 2 729 723
- WO-A1-2009/094193
- WO-A1-2010/067092
- WO-A1-2016/079253
- WO-A2-2015/067928
- GB-A- 2 152 143
- GB-A- 2 519 771
- US-A- 2 630 346
- US-A- 3 586 018
- US-B2- 9 217 526

## Description

La présente invention concerne une ligne flexible selon le préambule de la revendication 1.

La ligne flexible est notamment une conduite flexible telle que décrite dans les documents normatifs publiés par l'American Petroleum Institute (API), API 17J « Specification for Unbonded Flexible Pipe », et API RP 17B « Recommended Practice for Flexible Pipe ». La conduite flexible est avantageusement de type non liée (« unbonded » en anglais).

En variante, la ligne flexible est un faisceau composite de type « integrated production bundle », comprenant au moins un tube de transport de fluide et un ensemble de câbles électriques ou optiques propres à transporter une puissance électrique ou hydraulique ou une information entre le fond et la surface de l'étendue d'eau.

Plus généralement, la ligne flexible est un ombilical, tel que décrit dans les documents normatifs publiés par l'American Petroleum Institute (API), API 17E « Specification for Subsea Umbilicals ».

Les lignes flexibles comportent généralement une gaine externe de protection définissant un volume intérieur et au moins une gaine imperméable disposée à l'intérieur du volume intérieur.

Cette gaine imperméable est par exemple une gaine de pression délimitant un passage de circulation de fluide ou une gaine intermédiaire disposée entre la gaine de pression et la gaine externe.

Une voûte de pression et des nappes d'armures de traction formées de fils généralement métalliques sont disposées dans l'espace annulaire entre la gaine imperméable et la gaine externe, pour assurer une bonne résistance à la traction.

Dans certains cas, la longueur de la ligne est très grande, notamment pour les lignes adaptées pour les grandes profondeurs, ce qui engendre une grande tension sur les armures de traction.

Les armures étant tendues axialement, elles produisent une pression de contact radial élevée sur la gaine imperméable, qui vient s'ajouter aux pressions extérieures importantes aux grandes profondeurs.

Si elle n'est pas limitée, cette pression de contact radial est susceptible d'engendrer un fluage de la gaine imperméable à l'interface avec les nappes d'armures de traction, mais également de diminuer la résistance à la fatigue des armures, ce qui peut, dans certains cas critiques, réduire significativement la durée de vie de la ligne.

Une méthode pour pallier ce problème consiste à utiliser une ligne flexible dans laquelle l'espace annulaire compris entre la gaine imperméable et la gaine externe et contenant les armures de traction est au moins partiellement rempli d'eau de mer pour présenter une meilleure résistance aux déformations.

Dans certains cas, notamment lorsque la ligne ne comporte qu'un seul espace annulaire, cet espace annulaire contient de l'eau (H₂O) et des gaz acides tels que par exemple du sulfure d'hydrogène (H₂S) et du dioxyde de carbone (CO₂) issus des fluides transportés, et dont la pression partielle est relativement élevée. Les couches de renforcement métallique situées dans cet espace annulaire sont alors soumises au phénomène de corrosion, pouvant conduire suivant la sévérité du milieu régnant dans l'annulaire, à une perte d'intégrité des propriétés mécaniques de la ligne flexible et à terme à sa ruine.

Pour pallier ce problème, l'espace annulaire de la ligne flexible est partiellement ou totalement rempli avec de l'eau de mer, qui est ensuite confinée dans l'espace annulaire. L'oxygène en solution est consommé et non renouvelé, sa teneur en solution diminue et la consommation des molécules de sulfure d'hydrogène se stabilise. Ainsi, on diminue le phénomène de corrosion des couches de renforcement.

Le remplissage de l'espace annulaire dans une telle ligne se fait généralement par des orifices munis de vannes qui sont refermées après l'étape de remplissage, soit par intervention manuelle dans le cas d'un remplissage en surface, soit au moyen d'un véhicule sous-marin piloté à distance (« remotely operated vehicule » en anglais ou ROV).

La fermeture des vannes après le remplissage permet de confiner l'eau de mer contenue dans l'espace annulaire contenant les armures de traction. Le non-renouvellement de cette eau permet de limiter l'étendue des attaques de corrosion sur les armures de traction, l'oxygène pouvant participer à l'oxydation du métal est consommé et non renouvelé.

L'opération de fermeture des vannes à une profondeur élevée se révèle complexe et couteuse lorsqu'elle requiert l'utilisation d'un ROV.

Les documents WO 2015/067928 A2, EP 0 341 144 A1, WO 2010/067092 A1, EP 2 729 723 A2 et US 9,217,526 B2 décrivent des exemples de conduites flexibles.

Un but de l'invention est de fournir une ligne flexible dont l'espace annulaire est inondable et dont les vannes de contrôle du contenu de l'annulaire peuvent être fermées de manière simple.

À cet effet, l'invention a pour objet une ligne flexible selon la revendication 1.

Des caractéristiques avantageuses de la ligne flexible selon l'invention forment l'objet des revendications dépendantes 2 à 13.

L'invention sera mieux comprise à la lecture de la description qui va suivre, donnée uniquement à titre d'exemple, et faite en se référant aux dessins annexés, sur lesquels :
- la figure 1 est une vue schématique d'une ligne flexible en cours d'utilisation en mer ;
- la figure 2 est une vue en perspective partiellement écorchée d'une première ligne flexible selon l'invention ;
- la figure 3 est une vue en perspective partiellement écorchée d'une variante de ligne flexible selon l'invention ;
- la figure 4 est une vue en coupe d'une partie d'un embout d'extrémité de ligne présentant un orifice de remplissage muni d'une vanne ;
- la figure 5 est une vue en coupe détaillée de la vanne de la figure 4 ;
- la figure 6 est une représentation schématique de la vanne de la figure 5 ;
- la figure 7 est une vue en coupe détaillée de la vanne de la figure 5 après sa fermeture ;
- la figure 8 est une représentation schématique de la vanne de la figure 7 ;
- les figures 9 à 13 sont des représentations schématiques de variantes de l'élément de déclenchement de la vanne de la figure 6 ;
- les figures 14, 15 et 16 sont des représentations schématiques de vannes selon un deuxième, troisième et quatrième mode de réalisation de l'invention ;
- la figure 17 est une représentation schématique d'une variante de la vanne de la figure 6 ; et
- la figure 18 est une représentation schématique de la vanne de la figure 17 après sa fermeture.

Dans tout ce qui suit, les termes « extérieur » ou « extérieurement » et « intérieur » ou « intérieurement » s'entendent généralement de manière radiale par rapport à un axe A-A' de la ligne, le terme « extérieur » s'entendant comme relativement plus éloigné radialement de l'axe A-A' et le terme « intérieur » s'entendant comme relativement plus proche radialement de l'axe A-A' de la ligne.

Par ailleurs, les termes « amont » et « aval » s'entendent généralement par rapport au sens normal de circulation d'un fluide le long de la ligne ou à travers un orifice ménagé dans la ligne, le fluide circulant de l'amont vers l'aval.

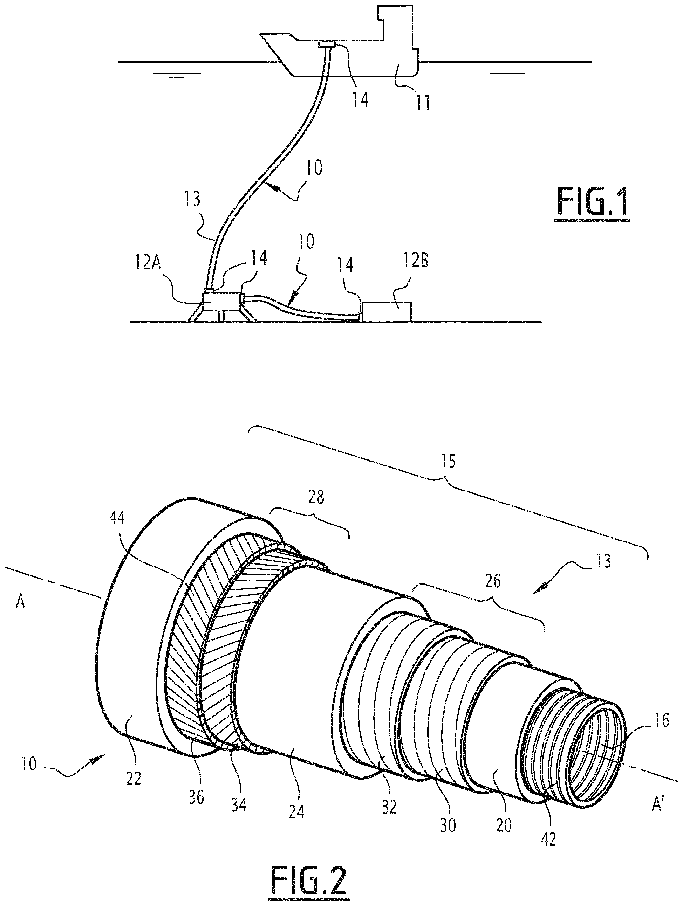

La ligne flexible 10 est destinée à convoyer un fluide ou un mélange de fluides, par exemple un gaz ou un liquide extrait du sous-sol marin, entre le fond et la surface d'une étendue d'eau, comme représenté sur la figure 1.

L'étendue d'eau est par exemple, une mer, un lac ou un océan. La profondeur de l'étendue d'eau au droit de l'installation d'exploitation de fluide est par exemple comprise entre 50 m et 4000 m.

La ligne flexible 10 raccorde un ensemble de surface 11, par exemple un navire ou une plateforme, à un ensemble de pompage 12A situé au fond de l'étendue d'eau.

En variante, la ligne flexible 10 raccorde un ensemble de pompage 12A à un ensemble de production 12B, tous deux situés au fond de l'étendue d'eau.

Une ligne flexible 10 selon l'invention, formée par une conduite flexible, est illustrée partiellement sur la figure 2.

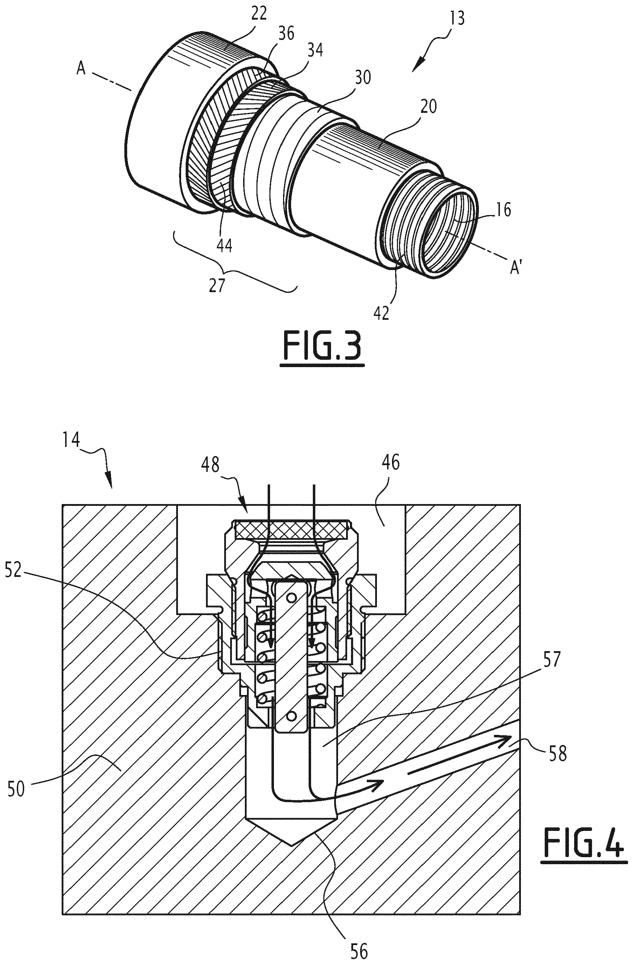

La ligne flexible 10 comporte un tronçon central 13 et à chacune des extrémités axiales du tronçon central 13, un embout d'extrémité 14, visible sur la figure 1 et en partie sur la figure 4.

En référence à la figure 2, la ligne 10 comprend, dans son volume intérieur 15, un passage central 16 de circulation d'un fluide, avantageusement d'un fluide pétrolier. Le passage central 16 s'étend suivant un axe A-A'. Le passage central 16 débouche aux extrémités amont et aval de la ligne 10, à travers les embouts d'extrémité 14.

Le diamètre du passage central 16 est avantageusement compris entre 50 mm (2") et 500 mm (20").

Comme illustré par la figure 2, la ligne 10 comprend une pluralité de couches concentriques agencées autour de l'axe A-A', qui s'étendent continûment le long du tronçon central 13 jusqu'aux embouts d'extrémité 14 situés aux extrémités de la ligne 10.

La ligne flexible 10 est dans cet exemple une conduite « non liée » (désignée par le terme anglais « unbonded »).

Au moins deux couches adjacentes de la ligne flexible 10 sont libres de se déplacer longitudinalement l'une par rapport à l'autre par rapport à l'axe A-A' lors d'une flexion de la ligne.

Avantageusement, toutes les couches adjacentes de la ligne flexible sont libres de se déplacer l'une par rapport à l'autre. Une telle ligne est par exemple décrite dans les documents normatifs publiés par l'American Petroleum Institute (API), API 17J « Specification for Unbonded Flexible Pipe », et API RP 17B « Recommended Practice for Flexible Pipe ».

La ligne 10 comporte ici une gaine interne 20 à base de matériau polymère constituant une gaine de pression. La ligne 10 comprend également une gaine externe 22, destinée à la protection des couches de renforcement métallique de la ligne 10. En outre, comme représenté sur la figure 2, une gaine intermédiaire 24 étanche est interposée entre la gaine interne 20 et la gaine externe 22.

La gaine intermédiaire 24 définit avec la gaine interne 20, un espace annulaire interne 26. De plus, la gaine intermédiaire 24 définit avec la gaine externe 22 un espace annulaire externe 28.

Dans cet exemple, dans l'espace annulaire interne 26, la ligne 10 comporte une voûte de pression 30, et optionnellement, une frette interne 32 enroulée autour de la voûte de pression 30.

Dans l'espace annulaire externe 28, la ligne 10 comporte au moins deux nappes d'armures 34, 36 de résistance à la traction en métal, disposées extérieurement autour de la gaine intermédiaire 24.

En variante non représentée, la ligne 10 comporte, dans l'espace annulaire interne 26, au moins deux nappes d'armures de traction 34, 36 internes disposées extérieurement par rapport à la voûte de pression 30 et par rapport à la frette 32 et dans l'espace annulaire externe 28, au moins deux nappes d'armures de traction externes disposées extérieurement autour de la gaine intermédiaire 24.

Selon une autre variante représentée figure 3, la ligne 10 ne comporte pas de gaine intermédiaire 24 et ne comporte alors qu'un seul espace annulaire 27 compris entre la gaine interne 20 et la gaine externe 22. Cet unique espace annulaire 27 comprend alors la voûte de pression 30 et les nappes d'armures de traction 34, 36.

Avantageusement, la ligne 10 comporte en outre une carcasse interne 42 disposée à l'intérieur de la gaine interne 20.

La carcasse 42, lorsqu'elle est présente, est formée par exemple d'un feuillard métallique profilé, enroulé en spirale. Les spires du feuillard sont avantageusement agrafées les unes aux autres, ce qui permet de reprendre les efforts radiaux d'écrasement.

L'enroulement hélicoïdal du feuillard métallique profilé formant la carcasse 42 est à pas court, c'est-à-dire qu'il présente un angle d'hélice de valeur absolue proche de 90°, typiquement compris entre 70° et 90° par rapport à l'axe A-A'.

Dans cet exemple, la carcasse 42 est disposée à l'intérieur de la gaine interne 20. La ligne est alors désignée par le terme anglais « rough bore » en raison de la géométrie de la carcasse 42.

En variante (non représentée), la ligne flexible 10 est dépourvue de carcasse interne 42, elle est alors désignée par le terme anglais « smooth bore ».

De manière connue, la gaine interne 20 est destinée à confiner de manière étanche le fluide transporté dans le passage 16. Elle est formée en matériau polymère, par exemple à base d'une polyoléfine telle que du polyéthylène, à base d'un polyamide tel que du PA11 ou du PA12, ou à base d'un polymère fluoré tel que du polyfluorure de vinylidène (PVDF) ou à base d'un polyaryléthercétone tel que du polyétheréthercétone (PEEK) ou du polyéthercétonecétone (PEKK), ou encore à base d'un polymère sulfoné tel que du polysulfone (PSU) ou du polyphénylsulfone (PPSU).

L'épaisseur de la gaine interne 20 est par exemple comprise entre 5 mm et 20 mm.

Dans cet exemple, la voûte de pression 30 est destinée à reprendre les efforts liés à la pression régnant à l'intérieur de la gaine interne 20. Elle est par exemple formée d'un fil profilé métallique entouré en hélice autour de la gaine 20. Le fil profilé présente de préférence une géométrie spécifique, notamment une section en forme de Z. La géométrie en Z permet d'améliorer la résistance mécanique générale de la ligne 10 et permet aussi de réduire sa masse.

En variante, le fil profilé présente une section en forme de T, de U, de K, de X ou de I.

La voûte de pression 30 est enroulée en hélice à pas court autour de la gaine interne 20, c'est-à-dire avec un angle d'hélice de valeur absolue proche de 90°, typiquement compris entre 70° et 90° par rapport à l'axe A-A'.

La frette 32, lorsqu'elle est présente, est constituée par un enroulement en spirale d'au moins un fil avantageusement de section transversale rectangulaire autour de la voûte de pression 30.

La superposition de plusieurs fils enroulés autour de la voûte de pression 30 peut avantageusement remplacer une épaisseur totale de frette 32 donnée. Ceci permet d'augmenter la résistance à l'éclatement de la ligne 10, mais également de diminuer le risque de fatigue par frottement. L'enroulement du au moins un fil est à pas court, c'est-à-dire avec un angle d'hélice de valeur absolue proche de 90°, typiquement compris entre 75° et 90° par rapport à l'axe A-A'.

Dans une variante de réalisation de l'invention, la voûte de pression 30 et la frette 32 sont remplacées par une voûte de pression d'épaisseur plus importante formée à partir d'un fil profilé en métal présentant une section en forme de T, de U, de K, de X ou de I, et/ou à partir d'au moins une bande en aramide à résistance mécanique élevée (Technora® ou Kevlar®), et/ou à partir d'au moins une bande composite comprenant une matrice thermoplastique dans laquelle sont noyées des fibres de carbone, des fibres de basait ou des fibres de verre.

Dans l'exemple représenté sur la figure 2, la ligne flexible 10 comporte au moins une paire de nappes d'armures internes 34, 36.

En variante, la ligne flexible 10 comporte plusieurs paires de nappes d'armures internes 34, 36 superposées les unes sur les autres, par exemple deux paires de nappes d'armures internes 34, 36.

Chaque paire comporte une première nappe d'armures internes 34 appliquée sur la gaine intermédiaire 24 ou sur une autre paire de nappes d'armures internes, et une deuxième nappe d'armures internes 36, disposée autour de la première nappe d'armures internes 34.

Chaque nappe d'armures internes 34, 36 comporte au moins un élément d'armures 44 longitudinal enroulé à pas long autour de l'axe A-A' de la ligne 10.

Par « enroulé à pas long », on entend que la valeur absolue de l'angle d'hélice est inférieure à 60°, et est typiquement comprise entre 20° et 60° par rapport à l'axe A-A'.

Dans l'exemple représenté sur la figure 2, la valeur absolue de l'angle d'hélice de chaque nappe d'armures internes 34, 36 est inférieure à 45°, et est notamment comprise entre 20° et 30°, et est environ égale à 25°.

Les éléments d'armures 44 d'une première nappe 34 sont enroulés généralement suivant un angle opposé par rapport aux éléments d'armures 44 d'une deuxième nappe 36. Ainsi, si l'angle d'enroulement des éléments d'armures 44 de la première nappe 34 est égal à + α, α étant compris entre 20° et 60°, l'angle d'enroulement des éléments d'armures 44 de la deuxième nappe 36 disposée au contact de la première nappe 34 est égal à - α, avec α compris entre 20° et 60°.

Les éléments d'armures 44 sont par exemple des fils métalliques, avantageusement de section rectangulaire, ou bien des profilés longitudinaux en matériau composite, ou encore des rubans à résistance mécanique élevée.

Dans cet exemple, chaque nappe d'armures 34, 36 repose sur au moins une bande anti-usure. La bande anti-usure est par exemple réalisée en plastique, notamment à partir d'une polyoléfine, d'un polyamide, d'un polyfluorure de vinylidène (PVDF) ou d'un polyphénylsulfone (PPSU). Elle présente une épaisseur inférieure à l'épaisseur de chaque gaine 20, 22, 24.

Avantageusement, un ruban de maintien telle qu'une bande en aramide à résistance mécanique élevée (Technora® ou Kevlar®) est enroulé autour de la deuxième nappe d'armures externes 36 la plus à l'extérieur par rapport à l'axe A-A', pour assurer un maintien mécanique des nappes d'armures externes 34, 36.

La gaine intermédiaire 24 est destinée à confiner l'espace annulaire interne 26. Ainsi, l'espace annulaire externe 28 destiné à être inondé est séparé de manière étanche de l'espace annulaire interne 26 destiné à rester sec.

La gaine intermédiaire 24 est avantageusement réalisée en matériau polymère, notamment à base d'une polyoléfine, tel que du polyéthylène, à base d'un polyamide, tel que du PA11 ou du PA12, ou à base d'un polymère fluoré tel que du polyfluorure de vinylidène (PVDF).

L'épaisseur de la gaine intermédiaire 24 est par exemple comprise entre 5 mm et 15 mm.

La gaine externe 22 est destinée à protéger l'espace annulaire 28 en empêchant la pénétration non contrôlée de fluide depuis l'extérieur de la ligne flexible 10 vers le volume intérieur 15. Elle protège également la surface des éléments d'armures 44 de la nappe externe 36 de résistance à la traction lors de la phase d'installation de la ligne 10. Elle est avantageusement réalisée en matériau polymère, notamment à base d'une polyoléfine, tel que du polyéthylène ou du polypropylène, à base d'un polyamide, tel que du PA11 ou du PA12, ou à base d'un polymère fluoré tel que du polyfluorure de vinylidène (PVDF).

L'épaisseur de la gaine externe 22 est par exemple comprise entre 5 mm et 15 mm.

De manière connue, les embouts d'extrémité 14 sont situés à chaque extrémité de la ligne flexible 10 et comportent une voûte d'extrémité et un capot délimitant une chambre de réception des extrémités des éléments d'armures de traction 44. Les gaines interne 20, intermédiaire 24 et externe 22 sont raccordées aux embouts d'extrémité 14 et l'étanchéité des raccords est assurée par des éléments de sertissage.

Chaque embout d'extrémité 14 comporte un canal central destiné à permettre l'écoulement du fluide transporté dans la ligne flexible 10 à travers le passage central 16 vers l'extérieur, généralement vers un autre segment de ligne flexible ou vers des ensembles de fond 12A, 12B ou de surface 11, avantageusement par l'intermédiaire d'une bride d'extrémité.

Selon l'invention, en référence à la figure 4, la ligne 10 présente au moins un orifice 46 d'introduction de liquide dans l'espace annulaire externe 28 et une vanne 48 d'obturation, propre à permettre l'introduction de liquide pour inonder au moins partiellement l'espace annulaire externe 28 de la ligne 10 lors de la mise en place de la ligne 10, puis à se refermer, une fois l'espace annulaire externe 28 inondé. Avantageusement, l'orifice 46 est ménagé dans la structure 50 de la voûte de l'embout d'extrémité 14.

Selon l'invention, la gaine externe 22 est apte à confiner le liquide introduit à travers l'orifice 46 muni de la vanne d'obturation 48 dans l'espace annulaire externe 28, empêchant ainsi une circulation de liquide non contrôlée entre l'espace annulaire externe 28 et l'extérieur.

L'orifice 46 est constitué d'un conduit étagé, percé dans la structure 50 de la voûte d'extrémité. La vanne 48 est vissée sur un filetage 52. Avantageusement, l'orifice 46 comporte au moins un joint (non représenté) améliorant l'étanchéité de l'ensemble constitué de l'orifice 46 et de la vanne 48.

L'orifice 46 est relié à l'espace annulaire externe 28 par un canal de liaison 56. Ce canal de liaison 56 comporte un tronçon sensiblement radial 57 raccordé à l'orifice 46 et un tronçon sensiblement axial 58 débouchant dans l'espace annulaire externe.

La vanne d'obturation 48 est propre à prendre une configuration de passage, dans laquelle elle permet la circulation de fluide depuis l'extérieur vers l'espace annulaire externe 28 ou bien depuis l'espace annulaire externe 28 vers l'extérieur, et une configuration de régulation, dans laquelle elle interdit les transferts de fluide de l'espace annulaire externe 28 vers l'extérieur.

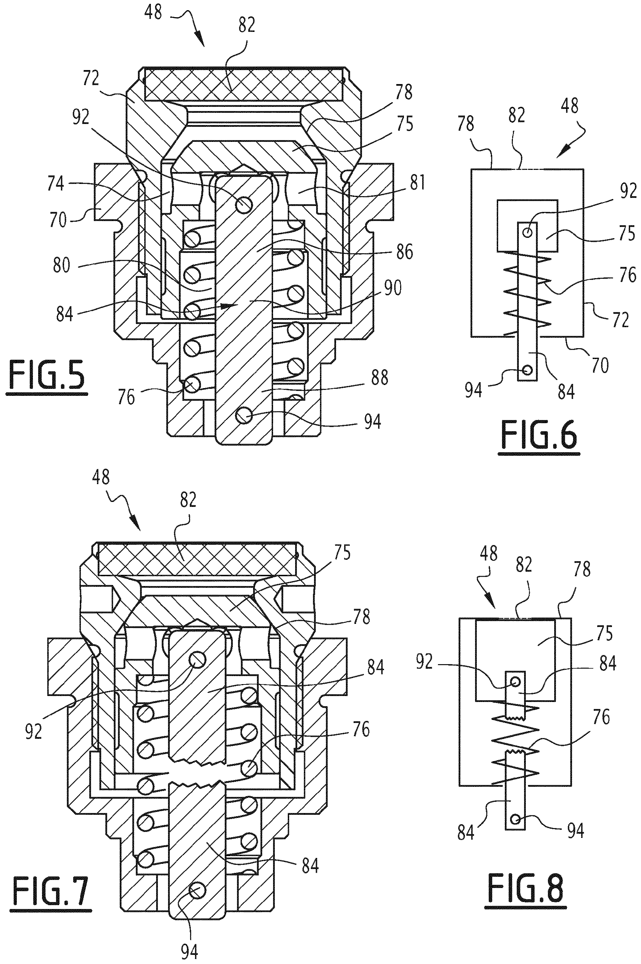

Dans l'exemple présenté figure 4, la vanne d'obturation 48 est une vanne anti-retour à ressort, représentée dans sa configuration de passage en détail figure 5 et schématiquement figure 6, et dans sa configuration de régulation en détail figure 7 et schématiquement figure 8.

La vanne anti-retour 48, dans sa configuration de régulation, présente un unique sens de blocage et un unique de sens de régulation. Les sens de blocage et de régulation sont opposés. Dans l'exemple représenté aux figures 4, 7 et 8, le sens de blocage est orienté depuis l'espace annulaire externe 28 vers l'extérieur. Le sens de régulation est alors orienté depuis l'extérieur vers l'espace annulaire externe 28.

La vanne anti-retour 48 dans sa configuration de régulation permet ou empêche les transferts de fluides dans le sens de régulation en fonction de la différence de pression de part et d'autre de la vanne.

Par convention, les zones amont et aval de la vanne 48 sont définies par rapport au sens de régulation, les fluides s'écoulant depuis l'amont vers l'aval en suivant le sens de régulation. Dans l'exemple représenté aux figures 4,7 et 8, l'amont correspond donc à l'extérieur tandis que l'aval correspond à l'espace annulaire externe 28.

La vanne anti-retour 48 est propre à prendre une position de fermeture visible sur les figures 7 et 8, interdisant les transferts de fluide lorsque la différence entre la pression du fluide en amont de la vanne et la pression du fluide en aval de la vanne est inférieure à une valeur seuil donnée.

En outre, la vanne anti-retour à ressort 48, dans sa configuration de régulation, est propre à prendre une position d'ouverture lorsque la différence entre la pression du fluide en amont de la vanne et la pression du fluide en aval de la vanne est supérieure à la valeur seuil donnée. La vanne anti-retour 48 permet alors les transferts de fluide depuis l'amont, situé à l'extérieur de la ligne 10, vers l'aval, situé dans l'espace annulaire externe 28.

La vanne anti-retour à ressort 48 comporte un corps de base 70 axialement creux, monté dans l'orifice 46 engagé dans le filetage 52, un insert 72 cylindrique fermant partiellement le corps de base creux 70, définissant avec le corps de base 70, un passage de circulation 74 traversant.

La vanne anti-retour à ressort 48 comporte une soupape 75 d'obturation, montée mobile dans le passage de circulation 74 entre une position de fermeture du passage 74, et une position d'ouverture du passage 74, et un ressort taré 76 propre à solliciter en permanence la soupape 75 vers sa position de fermeture.

L'insert 72 définit un siège 78 faisant saillie dans le passage 74 pour l'appui étanche de la soupape 75 dans la position de fermeture.

Le siège 78 empêche le déplacement de la soupape 75 vers l'extérieur de la ligne 10. Dans la position de fermeture, la soupape 75 s'appuie sur une surface intérieure du siège 78 et obture de manière étanche le passage 74.

Dans cet exemple, la soupape 75 est creuse. Elle présente une cavité intérieure 80 et des ouvertures traversantes 81 permettant le passage de liquide débouchant dans la cavité intérieure 80 en position d'ouverture. Le ressort 76 est maintenu comprimé dans la cavité intérieure 80, en appui entre le corps de base 70 et la soupape 75, pour solliciter la soupape 75 vers le siège 78.

La vanne est de plus munie d'un filtre 82, par exemple une grille métallique, situé au bout du passage 74. Ce filtre permet d'empêcher l'entrée de grosses particules, comme des grains de sable, dans la vanne 48 lors de la circulation de fluide, qui pourraient ensuite gêner sa fermeture.

Selon l'invention, la vanne anti-retour 48 comprend un élément de commutation 84 propre à commuter la vanne anti-retour 48 de sa configuration de passage vers sa configuration de régulation.

Cet élément de commutation 84 constitue initialement un lien, tel qu'un barreau rigide, reliant le corps de base 70 à la soupape 75, s'opposant à l'action du ressort 76.

Dans l'exemple représenté sur les figures 4 à 8, l'élément de commutation 84 est un barreau métallique propre à se corroder dans l'eau de mer. Le barreau 84 présente une extrémité haute 86 et une extrémité basse 88 reliées entre elles par une partie intermédiaire 90. Le barreau 84 est de faible épaisseur, par exemple comprise entre 0,2 mm et 1 mm. L'extrémité haute 86 est reliée à la soupape 75 par une première cheville 92, et l'extrémité basse 88 est reliée au corps de base creux 70 par une seconde cheville 94.

La longueur du barreau 84 est suffisamment faible pour qu'il maintienne la soupape 75 à distance du siège 78, en position d'ouverture, en s'opposant à l'action du ressort taré 76, ce qui constitue la configuration de passage de la vanne anti-retour 48.

Le matériau du barreau 84 est propre à se corroder sous l'effet de l'eau de mer, et l'épaisseur du barreau 84 est suffisamment faible pour qu'il puisse se rompre sous l'action du ressort taré 76 après une durée d'effet suffisante de la corrosion. Par exemple, le barreau 84 est propre à se rompre après un délai compris entre 5 heures et 3000 heures passées dans l'eau de mer.

Après la rupture du barreau 84, il ne s'oppose plus à l'action du ressort taré 76, qui sollicite alors la soupape 75 vers la position de fermeture. Cette configuration correspond à la configuration de régulation de la vanne anti-retour 48.

En variante, le barreau 84 est réalisé dans un matériau propre à se dissoudre dans le liquide, comme par exemple un matériau réalisé à partir d'une poudre solide ou d'un mélange de poudres solides, par exemple à base d'un phosphate de calcium et d'un acide polylactique (PLA) ou d'un acide polyhydroxyalcanoate (PHA), jusqu'à se rompre sous l'action conjuguée du ressort taré 76 et du liquide, et ainsi commuter la vanne anti-retour 48 vers sa configuration de régulation.

Dans une autre variante, l'élément de commutation 84 est un fil résorbable, par exemple en acides polyglycoliques (PGA), reliant les deux chevilles 92, 94 et s'opposant à l'effet du ressort taré 76, formant ainsi une configuration de passage. Ce fil est propre à se dissoudre après une durée d'immersion prédéfinie, jusqu'à se rompre sous l'action conjuguée du ressort taré 76 et du liquide.

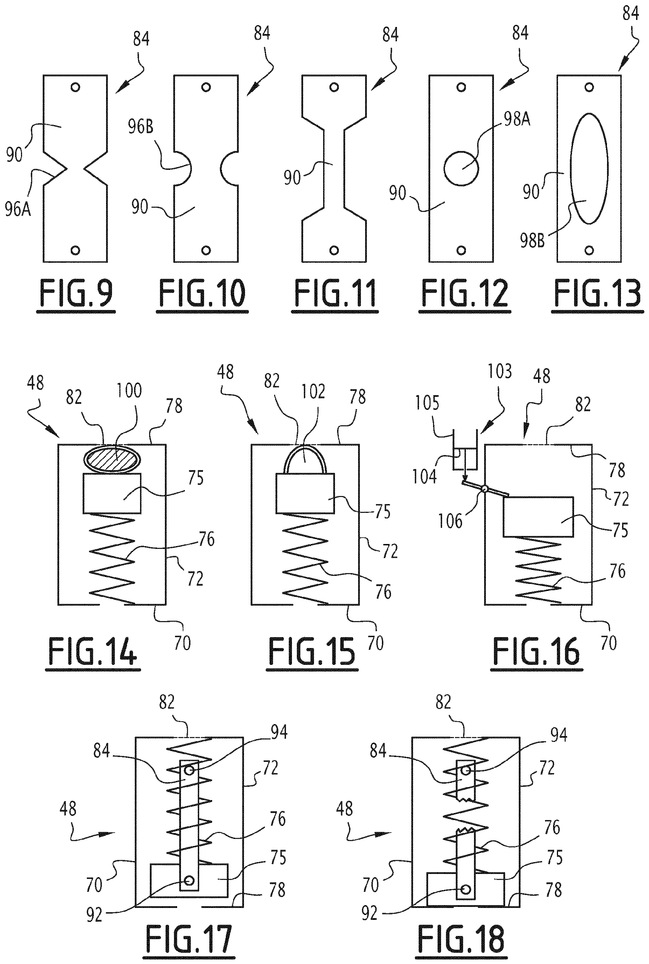

Selon d'autres variantes telles que représentées sur les figures 9 à 13, le barreau 84 présente un profil comportant suivant sa longueur une diminution de section.

Par exemple, la partie intermédiaire 90 comprend au moins une entaille sensiblement triangulaire 96A, comme représenté sur la figure 9, ou semi-circulaire 96B, comme représenté figure 10 ménagée dans la largeur du barreau métallique 84.

Alternativement, la partie intermédiaire 90 du barreau 84 présente une largeur inférieure au reste du barreau, par exemple inférieure à 25% de la largeur du barreau, comme représenté figure 11.

Alternativement encore, un trou circulaire 98A ou bien un trou oblong 98B est ménagé au centre de la partie intermédiaire 90 du barreau 84, comme représenté respectivement sur les figures 12 et 13.

Ainsi, le barreau 84 comprend une partie intermédiaire 90 moins résistante. Cette partie affaiblie est conçue de façon à ce que le barreau puisse se rompre sous l'action du ressort taré 76 après une action suffisante de la corrosion ou de sa dissolution.

Selon un deuxième mode de réalisation de l'invention, représenté figure 14, l'élément de commutation 84 est une cale 100, par exemple de forme ovoïde, placé entre la soupape 75 et le filtre 82, et dont la forme permet l'écoulement du liquide dans le passage de circulation 74. Cette cale 100 est faite dans un matériau propre à se dissoudre lentement sous l'effet de l'eau de mer. Avant sa dissolution, la cale 100 s'oppose à l'action du ressort taré 76 et maintient la soupape 75 dans sa position d'ouverture, ce qui constitue la configuration de passage de la vanne anti-retour 48. Après une certaine durée d'immersion de la ligne dans l'eau, la dissolution de la cale 100 est suffisamment avancée pour qu'elle ne s'oppose plus à l'action du ressort taré 76, qui sollicite alors la soupape 75 vers la position de fermeture. Cette configuration correspond à la configuration de régulation de la vanne anti-retour 48.

Selon un troisième mode de réalisation de l'invention, représenté figure 15, l'élément de commutation 84 présente une structure creuse 102, par exemple de la forme d'une sphère ou d'une demi-sphère, placée entre la soupape 75 et le filtre 81, et dont la forme permet l'écoulement du liquide dans le passage de circulation 74. Cette structure creuse 102 est faite dans un matériau fragile, par exemple en verre, et est propre à imploser sous l'effet d'une pression extérieure supérieure à une pression seuil prédéterminée, par exemple pour une pression extérieure supérieure à 100 bar. Avantageusement, cette pression seuil est choisie pour correspondre à la pression hydrostatique rencontrée à la profondeur à laquelle on souhaite terminer l'étape de remplissage de l'espace annulaire extérieur 28. Avant son implosion, la structure creuse 102 s'oppose à l'action du ressort taré 76 et maintient la soupape 75 dans sa position d'ouverture, ce qui constitue la configuration de passage de la vanne anti-retour 48. Après son implosion, la structure creuse 102 ne s'oppose plus à l'action du ressort taré 76, qui sollicite alors la soupape 75 vers la position de fermeture. Cette configuration correspond à la configuration de régulation de la vanne anti-retour 48.

Selon un quatrième mode de réalisation de l'invention, représenté figure 16, l'élément de commutation 84 est un système 103 comprenant une membrane 104 fixée de manière étanche sur un support 105. La membrane 104 est en contact avec le liquide environnant sur sa face externe et l'air sur sa face interne. La membrane 104 est reliée à une extrémité d'un levier 106, l'autre extrémité du levier 106 étant placée en appui sur la soupape 75 et bloquant son déplacement dans le passage 74. Ce système 103 est propre à actionner le levier 106 sous l'effet de la pression extérieure. Avant d'être actionné, le levier 106 s'oppose à l'action du ressort taré 76 et maintient la soupape 75 dans sa position d'ouverture, ce qui constitue la configuration de passage de la vanne anti-retour 48. Lorsque la pression extérieure dépasse une valeur seuil prédéterminée, l'actionnement du levier 106 est suffisant pour qu'il ne s'oppose plus à l'action du ressort taré 76, qui sollicite alors la soupape 75 vers la position de fermeture. Cette configuration correspond à la configuration de régulation de la vanne anti-retour 48.

Grâce à l'invention qui vient d'être décrite, il est possible de fournir une ligne flexible 10 dont l'annulaire extérieur 28 est muni de vannes 48 permettant de l'inonder lors de l'introduction de la ligne 10 dans une étendue liquide, notamment dans l'eau. Au bout d'une durée d'immersion prédéterminée ou lorsque la ligne 10 atteint une profondeur prédéterminée, les vannes 48 se ferment de manière autonome et confinent le liquide présent dans l'annulaire 28, améliorant ainsi la durabilité de la ligne 10 et réduisant l'étendue des attaques de corrosion sur les armures de traction 34, 36 présentes dans l'annulaire 28.

Selon une variante, la vanne anti-retour 48 est montée en sens inverse par rapport au mode de réalisation précédemment décrit, afin de réguler les transferts de fluides depuis l'espace annulaire externe 28 vers l'extérieur.

Dans cette variante, le siège 78 est situé dans la partie basse de la vanne 48, autour de l'extrémité du conduit 56 débouchant dans l'espace annulaire intérieur 28. La soupape 75 est assemblée orientée vers le corps de base 70, de façon à pouvoir venir en appui sur le siège 78 et obturer le conduit 56. Le ressort 76 est comprimé entre le haut de l'insert creux 72 et la soupape 75, de façon à solliciter la soupape 75 vers le siège 78. L'élément de commutation 84 est assemblé avec le haut de l'insert creux 72 par une première cheville 94 et avec la soupape 75 par une deuxième cheville 92.

L'élément de commutation 84 est propre à se dégrader et commuter la vanne anti-retour 48 d'une configuration de passage représentée sur la figure 17, au fonctionnement identique à celle du premier mode de réalisation, à une configuration de régulation représentée sur la figure 18.

Selon cette variante, lorsque la vanne est en configuration de régulation, le sens de blocage est orienté de l'extérieur vers l'espace annulaire externe 28, et le sens de régulation est orienté de l'espace annulaire externe 28 vers l'extérieur. Dans ce cas, la zone située en amont de la vanne correspond à l'espace annulaire externe 28 tandis que la zone située en aval de la vanne correspond à l'extérieur.

Ainsi, la vanne anti-retour 48 interdit tout transfert de fluide de l'extérieur de la ligne 10 vers l'espace annulaire externe 28.

La vanne anti-retour 48 interdit également les transferts de fluide lorsque la différence entre la pression du fluide en amont de la vanne, c'est-à-dire dans l'espace annulaire externe 28, et la pression du fluide en aval de la vanne, c'est-à-dire à l'extérieur de la ligne 10, est inférieure à une valeur seuil donnée.

La vanne anti-retour 48 permet les transferts de fluide depuis l'amont situé dans l'espace annulaire extérieur 28, vers l'aval situé à l'extérieur, lorsque la différence entre la pression du fluide en amont de la vanne et la pression du fluide en aval de la vanne est supérieure à la valeur seuil donnée.

Une vanne anti-retour 48 selon cette variante est généralement destinée à permettre l'expulsion de gaz présents dans l'espace annulaire externe 28 et pouvant causer un phénomène de surpression.

## Revendications

1. Ligne flexible (10) destinée à être mise en place dans une étendue de liquide, comportant :
- une gaine externe (22) définissant un volume intérieur (15);
- une gaine intermédiaire (24) située dans le volume intérieur (15), définissant un espace annulaire externe (28) compris entre la gaine intermédiaire (24) et la gaine externe (22) ;
- au moins un orifice (46) de circulation de fluide entre l'espace annulaire externe (28) et l'extérieur ;
- au moins une vanne (48) d'obturation du ou des orifices (46), propre à prendre une configuration de passage permettant la circulation de fluide dans les deux sens à travers l'orifice (46) et une configuration de régulation empêchant les transferts de fluide dans au moins un sens entre l'espace annulaire externe (28) et l'extérieur ;
**caractérisée en ce que** chaque vanne (48) comporte un élément de commutation (84), propre à commuter la vanne (48), de manière autonome, de sa configuration de passage vers sa configuration de régulation, après immersion de la ligne (10) dans le liquide, sous l'action du liquide environnant.

2. Ligne flexible (10) selon la revendication 1, dans laquelle l'élément de commutation (84) est propre à commuter la vanne (48), de manière autonome, de sa configuration de passage vers sa configuration de régulation après une durée prédéfinie d'immersion de la ligne (10) dans le liquide.

3. Ligne flexible (10) selon la revendication 2, dans laquelle la durée prédéfinie est comprise entre 5 heures et 3000 heures.

4. Ligne flexible (10) selon la revendication 1, dans laquelle l'élément de commutation (84) est propre à commuter la vanne (48), de manière autonome, de sa configuration de passage vers sa configuration de régulation sous l'effet d'une pression du liquide au voisinage de l'élément de commutation (84) supérieure à un seuil prédéfini.

5. Ligne flexible (10) selon l'une quelconque des revendications 1 à 4, dans laquelle la vanne (48) du ou des orifices (46) est une vanne anti-retour présentant dans sa configuration de régulation un unique sens de blocage et un unique sens de régulation opposé au sens de blocage, la vanne (48) étant propre, dans sa configuration de régulation, à empêcher en permanence la circulation de fluide dans le sens de blocage, la vanne (48) étant également propre, dans sa configuration de régulation, à permettre les transferts de fluide d'amont en aval, dans le sens de régulation lorsque la différence entre la pression du fluide en amont de la vanne (48) et la pression du fluide en aval de la vanne (48) dépasse une valeur seuil donnée non nulle, et la vanne (48) étant en outre propre, dans sa configuration de régulation, à interdire les transferts de fluide dans le sens de régulation lorsque la différence entre la pression du fluide en amont de la vanne (48) et la pression du fluide en aval de la vanne (48) est inférieure à la valeur seuil donnée non nulle.

6. Ligne flexible (10) selon la revendication 5, dans laquelle le sens de blocage de la vanne anti-retour (48) va depuis l'espace annulaire externe (28) vers l'extérieur, l'extérieur de la ligne (10) étant en amont de la vanne (48) et l'espace annulaire extérieur (28) étant en aval de la vanne (48).

7. Ligne flexible (10) selon la revendication 5, dans laquelle le sens de blocage de la vanne anti-retour (48) va depuis l'extérieur vers l'espace annulaire externe (28), l'espace annulaire externe (28) étant en amont de la vanne (48) et l'extérieur de la ligne (10) étant en aval de la vanne (48).

8. Ligne flexible (10) selon l'une quelconque des revendications précédentes, dans laquelle l'élément de commutation (84) est propre à se dégrader sous l'action du liquide environnant, après une certaine durée d'immersion de la ligne (10) dans le liquide.

9. Ligne flexible (10) selon la revendication 8, dans laquelle l'élément de commutation (84) est propre à se dégrader par corrosion.

10. Ligne flexible (10) selon la revendication 8, dans laquelle l'élément de commutation (84) est propre à se dégrader par dissolution.

11. Ligne flexible (10) selon l'une quelconque des revendications 1 à 7, dans laquelle l'élément de commutation (84) est propre à se dégrader au-dessus d'une pression seuil prédéterminée du liquide au voisinage de l'élément de commutation (84).

12. Ligne flexible (10) selon la revendication 11, dans laquelle l'élément de commutation (84) est en matériau fragile et est propre à se briser au-dessus de la pression seuil prédéterminée de liquide au voisinage de l'élément de commutation (84).

13. Ligne flexible (10) selon l'une quelconque des revendications précédentes, comportant au moins une nappe d'armures de traction (34, 36) disposées dans l'espace annulaire externe (28).

## Patentansprüche

1. Flexible Leitung (10), die vorgesehen ist, in einem Flüssigkeitsbereich in Stellung gebracht zu werden, umfassend:
- eine äußere Umhüllung (22), die ein Innenvolumen (15) begrenzt;
- einen Zwischenmantel (24), der in dem Innenvolumen (15) liegt und einen äußeren Ringraum (28) begrenzt, der zwischen dem Zwischenmantel (24) und der äußeren Umhüllung (28) umfasst ist;
- mindestens eine Öffnung (46) für die Zirkulation der Flüssigkeit zwischen dem äußeren Ringraum und dem Außenraum;
- mindestens ein Ventil (48) zum Verschließen der einen oder mehreren Öffnungen, das geeignet ist, eine Durchgangsstellung, in der die Strömung der Flüssigkeit in den zwei Richtungen durch die Öffnung (46) ermöglicht wird, und einer Regulierstellung, die die Übertragungen der Flüssigkeit in mindestens eine Richtung zwischen dem äußeren Ringraum (28) und dem Außenraum verhindert, einzunehmen;
**dadurch gekennzeichnet, dass** jedes Ventil (48) ein Umschaltelement (84) aufweist, das geeignet ist, das Ventil (48) in autonomer Weise nach dem Eintauchen der Leitung (10) in die Flüssigkeit unter der Wirkung der umgebenden Flüssigkeit von der Durchgangsstellung in die Regulierstellung umzuschalten.

2. Flexible Leitung (10) nach Anspruch 1, bei der das Umschaltelement (84) geeignet ist, das Ventil (48) in autonomer Weise von der Durchgangsstellung in die Regulierstellung nach einem vordefinierten Zeitraum des Eintauchens der Leitung (10) in die Flüssigkeit umzuschalten.

3. Flexible Leitung (10) nach Anspruch 2, bei der der vordefinierte Zeitraum zwischen 5 Stunden und 3000 Stunden liegt.

4. Flexible Leitung (10) nach Anspruch 1, bei der das Umschaltelement (84) geeignet ist, das Ventil (48) in autonomer Weise von der Durchgangsstellung in die Regulierstellung unter der Wirkung eines Drucks der Flüssigkeit in der Nähe des Umschaltelementes (84) größer als eine vorbestimmte Schwelle umzuschalten.

5. Flexible Leitung (10) nach einem beliebigen der Ansprüche 1 bis 4, bei der das Ventil (48) der einen oder mehreren Öffnungen (46) ein Rückschlagventil ist, das in seiner Regulierstellung eine einzige Sperrrichtung und eine einzige Regulierrichtung, entgegengesetzt zur Sperrrichtung, aufweist, wobei das Ventil (48) geeignet ist, in seiner Regulierstellung ständig die Strömung der Flüssigkeit in Sperrrichtung zu verhindern, das Ventil (48) gleichfalls geeignet ist, in seiner Regulierstellung Übertragungen der Flüssigkeit von stromaufwärts nach stromabwärts zu ermöglichen, wenn die Differenz zwischen dem Druck der Flüssigkeit stromaufwärts zum Ventil (48) und dem Druck der Flüssigkeit stromabwärts zum Ventil (48) einen gegebenen Schwellenwert, der nicht Null ist, übersteigt, und das Ventil (48) außerdem geeignet ist, in seiner Regulierstellung Übertragungen der Flüssigkeit in die Regulierrichtung zu verhindern, wenn die Differenz zwischen dem Druck der Flüssigkeit stromaufwärts zum Ventil (48) und dem Druck der Flüssigkeit stromabwärts zum Ventil (48) kleiner ist als der gegebene Schwellenwert, der nicht Null ist.

6. Flexible Leitung (10) nach Anspruch 5, bei der die Sperrrichtung des Rückschlagventils (48) von dem äußeren Ringraum (28) zum Außenraum gegeben ist, wobei der Außenraum der Leitung (10) stromaufwärts zum Ventil (48) liegt und der äußere Ringraum (28) stromabwärts zum Ventil (48) liegt.

7. Flexible Leitung (10) nach Anspruch 5, bei der die Sperrrichtung des Rückschlagventils (48) von dem Außenraum zum äußeren Ringraum (28) gegeben ist, wobei der äußere Ringraum (28) stromaufwärts zum Ventil (48) liegt und der Außenraum der Leitung (10) stromabwärts zum Ventil (48) liegt.

8. Flexible Leitung (10) nach einem beliebigen der vorhergehenden Ansprüche, bei der das Umschaltelement (84) geeignet ist, sich unter der Wirkung der umgebenden Flüssigkeit nach einer bestimmten Dauer des Eintauchens der Leitung in die Flüssigkeit zu verschlechtern.

9. Flexible Leitung (10) nach Anspruch 8, bei der das Umschaltelement (84) geeignet ist, sich durch Korrosion zu verschlechtern.

10. Flexible Leitung (10) nach Anspruch 8, bei der das Umschaltelement (84) geeignet ist, sich durch Auflösen zu verschlechtern.

11. Flexible Leitung (10) nach einem beliebigen der Ansprüche 1 bis 7, bei der das Umschaltelement (84) geeignet ist, sich oberhalb einer vorbestimmten Schwelle des Drucks der Flüssigkeit in der Nähe des Umschaltelementes (84) zu verschlechtern.

12. Flexible Leitung (10) nach Anspruch 11, bei der das Umschaltelement (84) aus einem zerbrechlichen Material ist und geeignet ist, über der vorbestimmten Schwelle des Drucks der Flüssigkeit in der Nähe des Umschaltelementes (84) zu zerbrechen.

13. Flexible Leitung (10) nach einem beliebigen der vorhergehenden Ansprüche, mindestens eine Zugarmierungsschicht (34, 36) umfassend, die in dem äußeren Ringraum angeordnet ist (28).

## Claims

1. Flexible line (10) to be placed in a body of liquid, comprising:
- an outer sheath (22) defining an inner volume (15);
- an intermediate sheath (24) situated in the inner volume (15), defining an outer annular space (28) between the intermediate sheath (24) and the outer sheath (22);
- at least one orifice (46) for the flow of fluid between the outer annular space (28) and the outside;
- at least one valve (28) for shutting off the orifice(s) (46), capable of assuming a passage configuration permitting the flow of fluid in both directions through the orifice (46) and a regulating configuration preventing the transfer of fluid in at least one direction between the outer annular space (28) and the outside;
**characterised in that** each valve (48) comprises a switching element (84) capable of switching the valve (48), autonomously, from its passage configuration to its regulating configuration, after the line (10) has been immersed in the liquid, under the action of the surrounding liquid.

2. Flexible line (10) according to claim 1, wherein the switching element (84) is capable of switching the valve (48), autonomously, from its passage configuration to its regulating configuration after a predefined immersion time of the line (10) in the liquid.

3. Flexible line (10) according to claim 2, wherein the predefined time is between 5 hours and 3000 hours.

4. Flexible line (10) according to claim 1, wherein the switching element (84) is capable of switching the valve (48), autonomously, from its passage configuration to its regulating configuration under the effect of a pressure of the liquid in the vicinity of the switching element (84) greater than a predefined threshold.

5. Flexible line (10) according to any one of claims 1 to 4, wherein the valve (48) of the orifice(s) (46) is a non-return valve having in its regulating configuration a single blocking direction and a single regulating direction which is opposed to the blocking direction, the valve (48) being capable, in its regulating configuration, of permanently preventing the flow of fluid in the blocking direction, the valve (48) also being capable, in its regulating configuration, of permitting the transfer of fluid from upstream to downstream, in the regulating direction, when the difference between the pressure of the fluid upstream of the valve (48) and the pressure of the fluid downstream of the valve (48) exceeds a given non-zero threshold value, and the valve (48) further being capable, in its regulating configuration, of preventing the transfer of fluid in the regulating direction when the difference between the pressure of the fluid upstream of the valve (48) and the pressure of the fluid downstream of the valve (48) is less than the given non-zero threshold value.

6. Flexible line (10) according to claim 5, wherein the blocking direction of the non-return valve (48) goes from the outer annular space (28) to the outside, the outside of the line (10) being upstream of the valve (48) and the outer annular space (28) being downstream of the valve (48).

7. Flexible line (10) according to claim 5, wherein the blocking direction of the non-return valve (48) goes from the outside to the outer annular space (28), the outer annular space (28) being upstream of the valve (48) and the outside of the line (10) being downstream of the valve (48).

8. Flexible line (10) according to any one of the preceding claims, wherein the switching element (84) is capable of degrading under the action of the surrounding liquid, after the line (10) has been immersed in the liquid for a certain time.

9. Flexible line (10) according to claim 8, wherein the switching element (84) is capable of degrading by corrosion.

10. Flexible line (10) according to claim 8, wherein the switching element (84) is capable of degrading by dissolving.

11. Flexible line (10) according to any one of claims 1 to 7, wherein the switching element (84) is capable of degrading above a predetermined threshold pressure of the liquid in the vicinity of the switching element (84).

12. Flexible line (10) according to claim 11, wherein the switching element (84) is made of fragile material and is capable of breaking above the predetermined threshold pressure of liquid in the vicinity of the switching element (84).

13. Flexible line (10) according to any one of the preceding claims, comprising at least one tensile armour ply (34, 36) arranged in the outer annular space (28).
